Europäisches Patentamt

European Patent Office

Office européen des brevets

(11) Publication number: **0 338 391**
**A2**

## (12) EUROPEAN PATENT APPLICATION

(21) Application number: **89106453.7**

(22) Date of filing: **12.04.89**

(51) Int. Cl.⁴: **B29C 45/17**

(30) Priority: **18.04.88 IT 2023588**

(43) Date of publication of application:
**25.10.89 Bulletin 89/43**

(84) Designated Contracting States:
**DE ES FR GB**

(71) Applicant: **NEGRI BOSSI S.P.A.**
**Viale Europe 64**
**I-20093 Cologno Monzese(IT)**

(72) Inventor: **Bodini, Gianni**
**Via Maggioni 13**
**I-21026 Gavirate (Varese)(IT)**
Inventor: **Castelli, Romano**
**Via Lainate 64**
**I-20016 Rho (Milan)(IT)**

(74) Representative: **Giambrocono, Alfonso, Dr.**
**Ing. et al**
**Ing. A. Giambrocono & C. S.r.l. Via Rosolino**
**Pilo 19/B**
**I-20129 Milano(IT)**

(54) **Injection press with device for the quick demounting and remounting of the plasticizing unit.**

(57) An injection press with a device for the quick mounting and demounting of the plasticizing unit, in which the plasticizing cylinder is fixed to a member insertable into and withdrawable from a seat provided in the machine frame, and lockable therein by wedge means which can be tightened by screws against the action of elastic means which release the wedges during the withdrawal operation. Bayonet means are provided to enable the end of the plasticizing screw to be quickly engaged with and disengaged from the head of the injection piston.

Fig. 1

# INJECTION PRESS WITH DEVICE FOR THE QUICK DEMOUNTING AND REMOUNTING OF THE PLASTICIZ-ING UNIT

In the modern plastics moulding industry the need to change the type of plastics material used arises frequently.

This is not an easy matter, because an injection press fed with one type of material cannot be fed with another material without problems arising due to the presence of residues of the first material in the plasticizing cylinder even after many cycles of operation with the new type of plastics material.

These residues appear in the form of intrusions in the moulded article with the result that it has to be rejected, with consequent economic damage.

It has therefore now become normal to carefully clean the plasticizing cylinder of plastics residues every time the material is changed.

However, this operation results in a considerable machine downtime and the risk of damaging the surface of the plasticizing screw with the cleaning brush.

It is therefore preferred to use a different plasticizing cylinder for each type of plastics material used and to change the unit comprising the plasticizing cylinder and screw every time this material is changed.

Even though this operation gives economically better results than the preceding, it is not free of drawbacks, the most serious of which is the time required for demounting and remounting the various components.

The object of the present invention is to reduce said drawbacks by providing an injection press, particularly for moulding plastics materials, in which the cylinder-screw plasticizing unit is mounted on the machine by means which enable it to be easily removed and replaced, so greatly reducing the time required to change the unit.

This object is attained by an injection press in which the plasticizing cylinder is connected to a slide which is insertable and withdrawable within suitable guides provided on the machine frame, suitable means being provided for connecting the plasticizing screw to the injection piston head and for positioning the slide in its guides.

These and further characteristics will be apparent from the detailed description given hereinafter by way of non-limiting example with reference to the accompanying drawings in which:

Figure 1 is a perspective outline diagram showing the basis of the system for connecting the cylinder-screw unit to an injection press, of which only a part is shown;

Figure 2 is a section through a practical embodiment of a connection made in accordance with the principle of Figure 1, the section being taken on a plane perpendicular to the axis of the plasticizing screw passing through the line II-II of Figure 1;

Figure 3 is a section on the line III-III of Figure 2;

Figure 4 is a partial section similar to Figure 2 but with the slide locking and positioning means in a position such as to be able to extract the cylinder-screw unit;

Figure 5 is a diagrammatic section on the line V-V of Figure 3 showing the system for connecting the end of the plasticizing screw to the head of the injection piston.

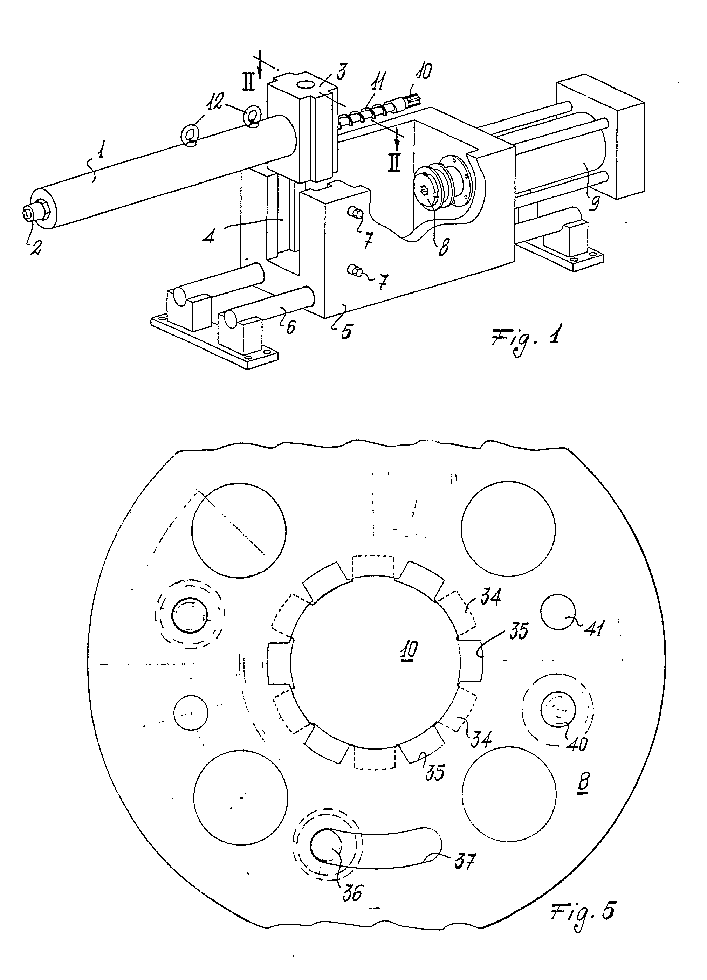

With reference to Figure 1, the plasticizing cylinder is connected at the end distant from the nozzle 2 to a slide 3 which can be inserted or extracted on guides 4 provided in a block 5 slidable along the tie rod 6 of the injection press, not shown. Means indicated diagrammatically at 7 lock the slide 4 in the inserted position.

The head 8 of an injection cylinder 9 is located at the opposite end of the block 5, to receive the end 10 of the plasticizing screw 11.

Said head 8 comprises an aperture for receiving the end 10 of the screw 11, for example as a bayonet fit.

It will be apparent that when the plasticizing cylinder-screw unit is to be replaced with another it is necessary only to retract the piston 8 and disengage the end 10 of the screw 11, release the locking means 7 and raise the cylinder 1 with the aid of the rings 12, which are provided on the cylinder 1 in a position preferably close to the centre of gravity.

To remount another cylinder this series of operations is reversed. Having explained the principle of operation reference will now be made to Figures 2, 3 and 4, in which parts corresponding to those of the outline diagram are indicated by the same reference numerals.

The slide 3 receives the cylinder 1 which is fixed to the slide in conventional manner by the half rings 13, which are housed in grooves formed partly in the cylinder 1 and partly in the slide 3 and retained there by a ring nut 14.

On two opposite sides, the slide 3 comprises robust projections 15 able to slide in the channels 4 provided in the block 5. One side 16 of each projection 15 is inclined, one side 17 of the channel 4 also being inclined at the same angle.

Between the sides 16 and 17 there is a wedge 18 extending over the entire height of the channel 4, its sides being inclined by the same angle as the

2

sides 16 and 17.

Threaded bores 19 are provided in one of the two wedges, the other being provided with through bores 20, through bores aligned with the bores 19 and 20 also being provided in the slide 3 (Figure 2). Robust screws 22 provided with an external head 23 and a collar 24 which acts on that wedge 18 closer to the screw head are inserted through the bores 25 provided in one side of the block 5 and though the bores 20 and 21, to be then screwed into the threaded bore 19.

It is apparent that on tightening the screw 22, the opposing wedges 18 are forced into the seat with the inclined sides 16 and 17, so locking the slide 3 in position.

A centering piece 26 facilitates the positioning of the slide 3 in the block 5.

For demounting, it is necessary only to extract the screws 22. As the wedges 18 could remain jammed in, screws 27 are provided screwed at 28 into the wedges and housed in apertures 29 provided in the block 5. in which springs 30 act in the sense of releasing the wedges.

Centering elements 31 comprising a stem 32 which partly penetrates into apertures 33 provided in the wedges 18 ensure that the wedges are centered. When the screws have been removed, the springs 30 release the wedges with the result that the slide 3 can be extracted (Figure 4).

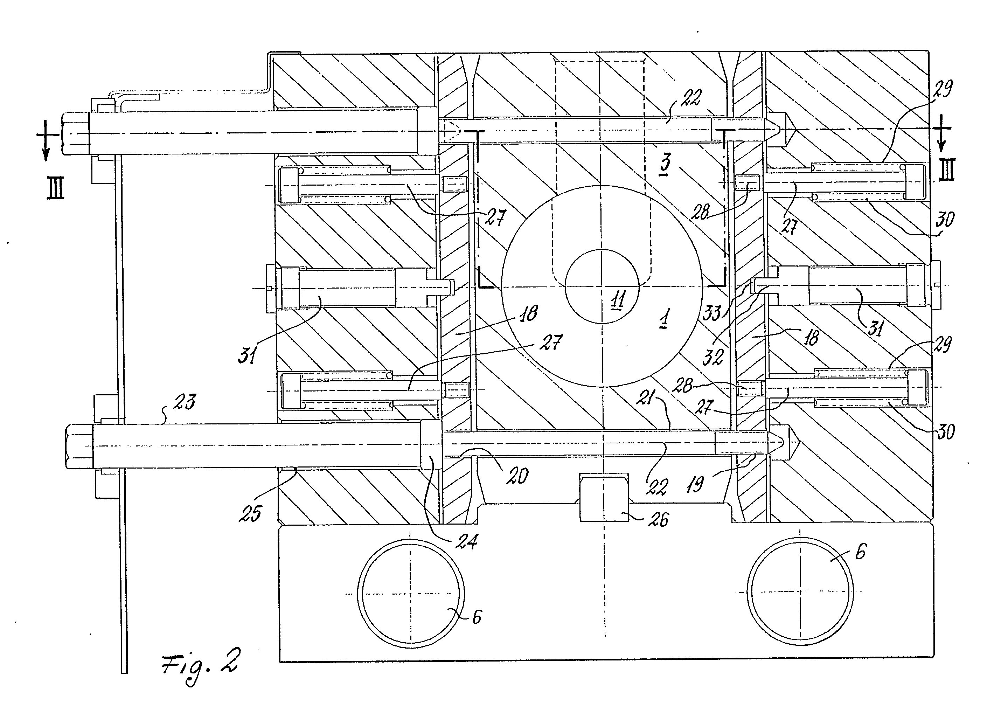

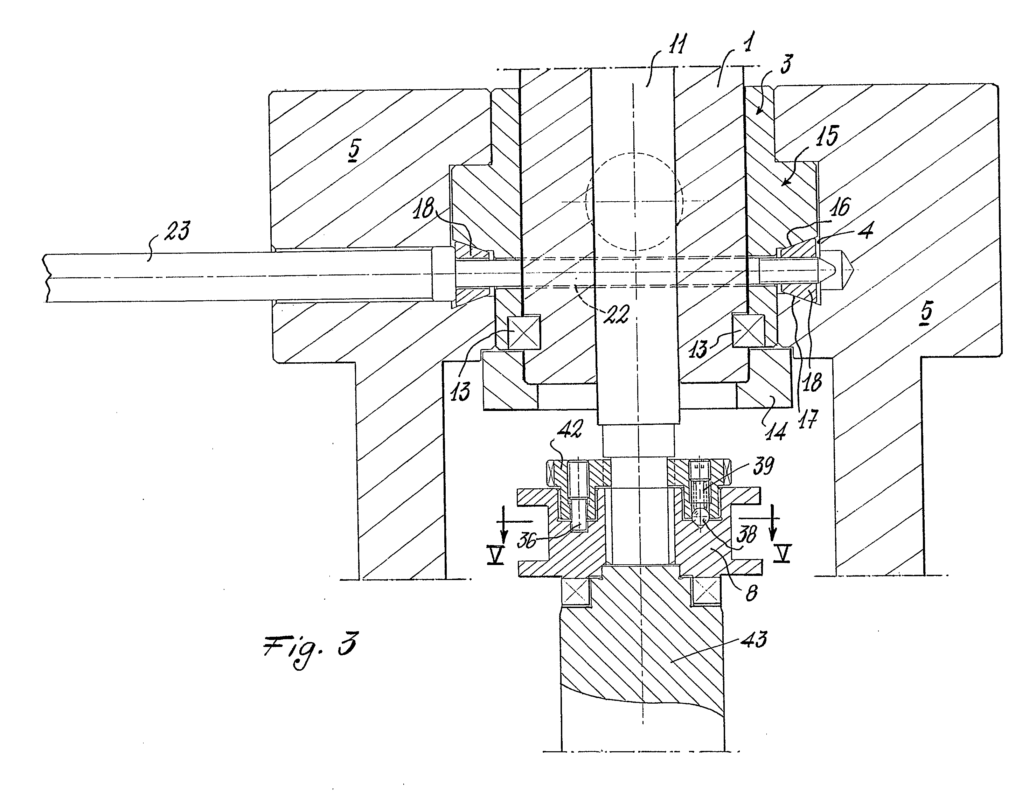

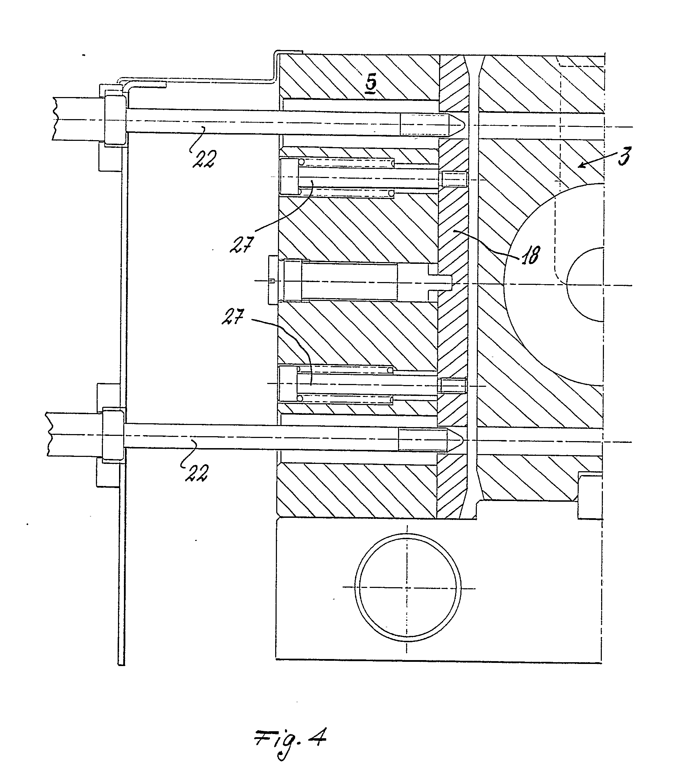

However, before this extraction the end 10 of the plasticizing screw must be released from the injection piston head 8. For this purpose, said end is broached to comprise a series of teeth 34, indicated by dashed lines in Figure 5. The head 8 comprises a series of corresponding recesses 35 shaped to comprise an initial axial portion followed by a circumferentially extending portion at right angles to this latter, to form a bayonet-type connector. The angle through which this connector arrangement can move is limited by a peg 36 (see Figures 3 and 5) which can slide in a slot 37, the two positions, namely engaged and disengaged, being identified by at least one ball 38 loaded by a spring 39 and snap-insertable into seats 40 and 41.

It will be apparent that starting from the engagement position of Figure 5, it is necessary only to rotate the flange through the arc allowed by the slot 37 to bring the teeth 34 into alignment with the apertures 35 and enable the ball 38 to enter 41.

The screw 11 can now be disengaged by retracting the piston 43 into cylinder 9 while holding the screw at rest.

Summarising, to change the plasticizing unit it is necessary to:
- disengage the screw 11 from the head 8 as just described
- extract the screws 22
- lift out the unit and replace it with another
- repeat the described operations in the reverse direction.

A particular embodiment of the invention has been described, but the invention is not limited to this as modifications can easily be devised for example in terms of the form of the slide or its locking means, or in the quick coupling system for coupling the end 10 to the head 8, all these modifications falling within the range of this invention.

## Claims

1. An injection press with devices for the quick mounting and demounting of the plasticizing unit, characterised in that the plasticizing cylinder (1) is fixed to a slide (3) receivable in an opening provided within a block (5) rigid with the machine frame, there being provided guide means (4, 15), positioning means (26) and locking means (18), and means (34, 35, 42) to enable the end of the plasticizing screw to be quickly engaged with and released from the head of the injection cylinder.

2. A press as claimed in claim 1, characterised in that said locking means consist of wedges (18) received in seats (16, 17) having inclined sides and forced therein by screws (22).

3. A press as claimed in claim 2, characterised in that the tightening of the wedges (18) takes place against the action of elastic means (27, 28, 30).

4. A press as claimed in claim 1, characterised in that the engagement and release means for the end of the plasticizing screw consist of a bayonet connector (34, 35) operated by a ring nut (42).

EP 0 338 391 A2

Fig. 1

Fig. 5

Fig. 2

Fig. 3

EP 0 338 391 A2

Fig. 4